# EUROPÄISCHE PATENTANMELDUNG

(11) **EP 2 405 276 A1**
(43) Veröffentlichungstag der Anmeldung: **11.01.2012**
(21) Anmeldenummer: 10007132.3
(22) Anmeldetag: 10.07.2010
(51) Int. Cl.: G01N 35/00, H01F 27/14

(54) **Labor-Verfahren und Labor-Anordnung zum Speichern und Erstellen von Daten einer entfernten elektrischen Leistungseinrichtung**

(71) Anmelder: ABB Technology AG, 8050 Zürich (CH)
(72) Erfinder: Fantana, Nicolaie L., 69124 Heidelberg (DE); Kouzine, Oleg, 40217 Düsseldorf (DE); Werle, Peter, 29664 Walsrode (DE); Radigk, Cornelia, 06124 Halle (DE)
(74) Vertreter: Partner, Lothar

(57) **Zusammenfassung**

Es werden ein Labor-Verfahren respektive eine Labor-Anordnung zum Speichern und Erstellen von Daten einer entfernten elektrischen Leistungs-Einrichtung vorgeschlagen,
- wobei Probeentnahme-Behälter (2) zur Aufnahme von Flüssigkeitsproben der entfernten elektrischen Leistungs-Einrichtung verwendet werden,
- wobei "administrative Daten" und eine eindeutige Identifikation der Flüssigkeitsprobe in einem Schreib/Lese-Speicher (3) des Probeentnahme-Behälters (2) abgespeichert sind,
- wobei die Daten des Schreib/Lese-Speichers (3) unter Zuordnung einer vergebenen individuellen Labor-Auftragsnummer von einer Lese/SchreibVorrichtung (4) einer Eingangs-Station (5) des Labors ausgelesen und einer zentralen Labor-Datenbank (10) zugeführt werden,
- wobei die Probeentnahme-Behälter (2) in einem Probeentnahme-Behälter-Lager (8) gelagert werden,
- wobei eine zentrale Diagnose-Vorrichtung (11) zeitlich entkoppelt hiervon eine Diagnose der entnommenen Flüssigkeitsprobe vornimmt und die ermittelten "aktuellen Diagnose-Daten" der zentralen Labor-Datenbank (10) zuführt,
- wobei die zentrale Labor-Datenbank (10) die "aktuellen Diagnose-Daten" und die in der Vergangenheit ermittelten Diagnose-Daten einem individuellen Analysesystem (12) zuführt, welches die Diagnose-Daten miteinander in Beziehung setzt und verarbeitet, um eine Abschätzung betreffend den zukünftigen Betrieb der entfernten elektrischen Leistungs-Einrichtung zu erhalten.

## Beschreibung

Die Erfindung bezieht sich auf ein Labor-Verfahren und auf eine Labor-Anordnung zum Speichern und Erstellen von Daten einer entfernten elektrischen Leistungs-Einrichtung.

Elektrische Leistungs-Einrichtungen der Energieerzeugung und industrielle Leistungs-Einrichtungen weisen vielfach Kühlflüssigkeiten oder Arbeitsflüssigkeiten, wie Öl auf. Ein Beispiel hierfür ist ein mit Öl gefüllter Leistungstransformator. Um den ordnungsgemäßen Betrieb der elektrischen Leistungs-Einrichtung dauerhaft sicherzustellen, ist es erforderlich, der Flüssigkeit in bestimmten zeitlichen Abständen eine Flüssigkeitsprobe zu entnehmen. Der mit der Flüssigkeitsprobe gefüllte Probeentnahme-Behälter wird danach in ein entferntes Labor transportiert, wo eine Diagnose und Analyse der Flüssigkeitsprobe erfolgen kann. Als Probeentnahme-Behälter können einerseits Flaschen aus Aluminium, Stahl, Glas oder Kunststoff verwendet werden, andererseits auch Spritzen oder zweiseitig offene Behälter.

Um eine genaue Zuordnung zwischen der entfernten elektrischen Leistungs-Einrichtung einerseits und der entnommenen Flüssigkeitsprobe anderseits festzuhalten, ist es üblich, die relevanten Daten, wie Eigentümer und kennzeichnende Daten der entfernten elektrischen Leistungs-Einrichtung, Entnahmeort und gewünschte Analysenwerte auf einem am Probeentnahme-Behälter befestigten Aufkleber oder einer Plakette niederzuschreiben. Dabei besteht das Risiko eines Verlustes dieser Plakette oder einer Beschädigung dieses Aufklebers. Des Weiteren ist es allgemein bekannt, einen Behälter mit einem Behälter-Tag zu versehen, welcher einen Lese-Speicherbereich aufweist, via Funk auslesbar ist und eine eindeutige Identifikation des Behälters ermöglicht.

Der Erfindung liegt die Aufgabe zugrunde, ein Labor-Verfahren und eine Labor-Anordnung zum Speichern und Erstellen von Daten einer entfernten elektrischen Leistungs-Einrichtung anzugeben,

Diese Aufgabe wird hinsichtlich des Verfahrens erfindungsgemäß gelöst durch ein Labor-Verfahren zum Speichern und Erstellen von Daten einer entfernten elektrischen Leistungs-Einrichtung,
- wobei Probeentnahme-Behälter zur Aufnahme von Flüssigkeitsproben der entfernten elektrischen Leistungs-Einrichtung verwendet werden,
- wobei "administrative Daten" und eine eindeutige Identifikation der Flüssigkeitsprobe in einem Schreib/Lese-Speicher des Probeentnahme-Behälters abgespeichert sind,
- wobei die Daten des Schreib/Lese-Speichers unter Zuordnung einer vergebenen individuellen Labor-Auftragsnummer von einer Lese/SchreibVorrichtung einer Eingangs-Station des Labors ausgelesen und einer zentralen Labor-Datenbank zugeführt werden,
- wobei die Probeentnahme-Behälter in einem Probeentnahme-Behälter-Lager gelagert werden,
- wobei eine zentrale Diagnose-Vorrichtung zeitlich entkoppelt hiervon eine Diagnose der entnommenen Flüssigkeitsprobe vornimmt und die ermittelten "aktuellen Diagnose-Daten" der zentralen Labor-Datenbank zuführt,
- wobei die zentrale Labor-Datenbank die "aktuellen Diagnose-Daten" und die in der Vergangenheit ermittelten Diagnose-Daten einem individuellen Analysesystem zuführt, welches die Diagnose-Daten miteinander in Beziehung setzt und verarbeitet, um eine Abschätzung betreffend den zukünftigen Betrieb der entfernten elektrischen Leistungs-Einrichtung zu erhalten.

Diese Aufgabe wird hinsichtlich der Anordnung erfindungsgemäß gelöst durch eine Labor-Anordnung zum Speichern und Erstellen von Daten einer entfernten elektrischen Leistungs-Einrichtung,
- wobei Probeentnahme-Behälter zur Aufnahme von Flüssigkeitsproben der entfernten elektrischen Leistungs-Einrichtung verwendet werden,
- wobei die Probeentnahme-Behälter einen Schreib/Lese-Speicher besitzen, welcher zumindest zum Abspeichern die Probeentnahme betreffender "administrativer Daten" geeignet ist und eine eindeutige Identifikation der Flüssigkeitsprobe ermöglicht,
- wobei die Labor-Anordnung eine Eingangs-Station mit einer Lese/SchreibVorrichtung besitzt, welche zum Auslesen der Daten des Schreib/Lese-Speichers dient,
- wobei ein Probeentnahme-Behälter-Lager zur Aufbewahrung der Probeentnahme-Behälter vorgesehen ist,
- wobei Labor-Diagnose-Vorrichtungen vorgesehen sind, welche "aktuelle Diagnose-Daten" der Flüssigkeitsprobe ermitteln,
- wobei eine zentrale Labor-Datenbank vorgesehen ist, welcher die "aktuellen Diagnose-Daten" zugeführt werden und in welcher die in der Vergangenheit ermittelten Diagnose-Daten abgespeichert sind,
- wobei ein individuelles Analysesystem vorgesehen ist, welches die "aktuellen Diagnose-Daten" und die in der Vergangenheit ermittelten Diagnose-Daten zueinander in Beziehung setzt.

Die zentrale Labor-Datenbank kann der Eingangs-Station für jeden Probeentnahme-behälter individuell gewünschte Auftrags-/Kunden-Informationen vorgeben. Das Analysesystem Empfehlungen betreffend die Wartung der entfernten elektrischen Leistungs-Einrichtung und/oder Empfehlungen betreffend die nächstfolgende Probeentnahme abgeben. Das individuelle Analysesystem kann zur Visualisierung der Ergebnisse und/oder zur Anzeige empfohlener / durchzuführender Maßnahme eine Analyse-Anzeigevorrichtung beaufschlagen.

Im Schreib/Lese-Speicher des Probeentnahme-Behälters können zusätzlich Vorort ermittelte "ad-hoc-Probe-Sensorik-Daten" abgespeichert sein, wobei diese "ad-hoc-Probe-Sensorik-Daten" in Beziehung zu den "aktuellen Diagnose-Daten" gesetzt werden. Dementsprechend kann das Analysesystem Empfehlungen betreffend eine erforderliche Kalibrierung abgeben.

Vorteilhaft können die Daten des Schreib/Lese-Speichers des Probeentnahme-Behälters nach dem erfolgten Auslesen überschrieben respektive gelöscht werden.

Die Eingangs-Station kann ein auf den Probeentnahme-Behälter aufzuklebendes Etikett erstellen, welches die vergebene individuelle Labor-Auftragsnummer dokumentiert. Dabei kann das Etikett den genauen Lagerort des Probeentnahme-Behälters innerhalb des Probeentnahme-Behälter-Lagers dokumentieren.

Schließlich kann der entleerte Probeentnahme-Behälter gereinigt und getrocknet werden.

Die zentrale Labor-Datenbank kann körperlich nicht selbst Teil der Labor-Anordnung sein, sondern über einen Kommunikationskanal mit der Labor-Anordnung verbunden sein.

Ganz allgemein gilt, dass das Labor auch in Form einer mobilen Einheit, z. B. integriert in einem Kraftfahrzeug realisierbar ist.

Die mit der Erfindung erzielbaren Vorteile bestehen insbesondere darin, dass die Eingabe, die Abspeicherung und die Verarbeitung von Daten von mehreren mindestens einer (vorzugsweise mehrerer) entfernten elektrischen Leistungs-Einrichtung(en) entnommenen Flüssigkeitsproben in systematischer, fehlerfreier und zeitsparender Art und Weise im Labor ermöglicht wird, so dass jede dieser entnommenen Flüssigkeitsproben einerseits individuell identifizierbar, abspeicherbar und verarbeitbar ist, andererseits jedoch eine sinnvolle Verknüpfung der individuellen Daten der Flüssigkeitsproben untereinander ermöglicht wird, um derart ein den aktuellen Zustand der mindestens einen entfernten elektrischen Einrichtung repräsentierendes Gesamtbild zu erhalten und um derart Maßnahmen vorschlagen zu können, welche den sicheren Betrieb der entfernten elektrischen Einrichtung auch zukünftig zu ermöglichen.

Die Details der Labor-Diagnose werden mit Vorort, d. h. am Ort der entfernten elektrischen Einrichtung, ermittelten ad-hoc-Probe-Sensorik-Daten, mit bereits abgespeicherten "historischen Daten" der entfernten elektrischen Einrichtung und mit aktuellen Kommentaren während der Probeentnahme verknüpft. Die Verknüpfungen und die hieraus abzuleitenden Vergleiche führen zu einer verbesserten Diagnose / Analyse und nachfolgend zu einer verbesserten Vorhersage hinsichtlich des zukünftigen Betriebes der entfernten elektrischen Leistungs-Einrichtung und zu einer verbesserten Entscheidungsfindung über sinnvolle Maßnahmen, wie Kalibrierung und erforderliche Überprüfungen der entfernten elektrischen Einrichtung ("Vorort").

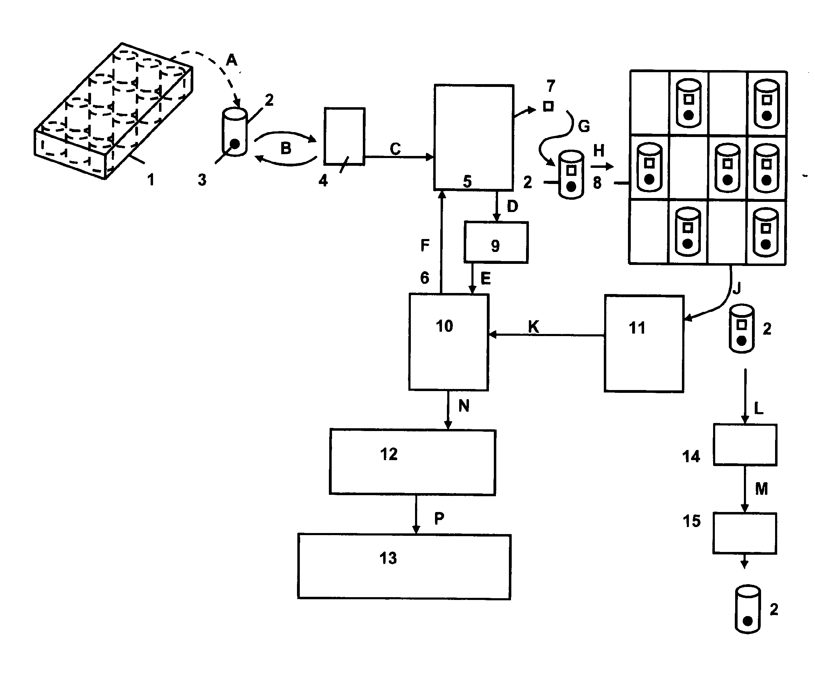

Die Erfindung wird nachstehend an Hand des in der Zeichnung dargestellten Ausführungsbeispiels erläutert.

Ausgangspunkt für die Labor-Anordnung und das Labor-Verfahren ist die Verwendung von Probeentnahme-Behältern für eine Flüssigkeit mit Behälter-Tag und vorzugsweise mit zugeordneter, lösbarer ad-hoc-Sensoreinheit. Es wird ein z. B. aus Aluminium bestehender Probeentnahme-Behälter für die Aufnahme einer Flüssigkeit, insbesondere Öl, z. B. Transformatorenöl, nachfolgend auch als Flüssigkeitsprobe bezeichnet, verwendet, welcher mittels einer Kappe verschlossen ist und an dessen Außenwand ein Behälter-Tag, vorzugsweise RFID-Tag (vorzugsweise vom passiven Typ) permanent angebracht, z. B. angeklebt ist. Die Kappe ist optional mit einer ad-hoc-Sensoreinheit versehen, deren Kommunikationsgruppe die Oberseite der Kappe überragt.

Der Behälter-Tag weist einen Lese-Speicherbereich (read-only) für das Abspeichern einer eindeutigen Identifikation auf. Der Behälter-Tag weist des Weiteren einen Schreib/Lese-Speicherbereich auf, welcher zum Abspeichern folgender die Probeentnahme betreffender "administrativer Daten" geeignet ist:
● Aufstellungsort und Eigentümer der entfernten elektrischen Leistungs-Einrichtung,
● kennzeichnende Daten der entfernten elektrischen Leistungs-Einrichtung,
• die entfernte elektrische Leistungs-Einrichtung betreffende "historische Daten",
• Flüssigkeitstyp, z. B. Öltyp,
• genauer Entnahmeort der Flüssigkeitsprobe, z. B. "im Bodenbereich", "im oberen Bereich", "im mittleren Bereich",
• Datum und Uhrzeit dieser Probeentnahme,
• Temperatur der Flüssigkeitsprobe während der Entnahme,
• Name der Service-Person, welche die Flüssigkeitsprobe entnommen hat,
• wichtige (kritische) Beobachtungen respektive Kommentare der Service-Person während der Entnahme der Flüssigkeitsprobe,
• die vom Labor zu ermittelnden gewünschten Analysenwerte, z. B. in der Flüssigkeit gelöste Gase, durchzuführende chemische Tests, Furane, usw.

Darüber hinaus dient der Schreib/Lese-Speicherbereich des Behälter-Tags zusätzlich für das Speichern von mittels der ad-hoc-Sensoreinheit ermittelten gewünschten Sensordaten. In einem solchen Fall enthalten die Speichermittel des Behälter-Tags alle Vorort während der Entnahme ermittelten, die Flüssigkeitsprobe betreffenden und für das Labor wichtigen "ad-hoc-Probe-Sensorik-Daten".

Damit wird durch den Behälter-Tag eine eindeutige, nicht änderbare und verwechslungssichere Bezeichnung zur eindeutigen Identifizierung der Flüssigkeitsprobe sichergestellt. Des Weiteren besitzt der Behälter-Tag vorzugsweise einen Temperatursensor zur Ermittlung der während der Erfassung der gewünschten Flüssigkeitsprobe herrschenden Temperatur (Behältertemperatur).

Bei Verwendung eines passiven RFID-Tags als Behälter-Tag entspricht quasi die Behältertemperatur der augenblicklichen Temperatur zum Ablesezeitpunkt der entnommenen Flüssigkeit und wird nach dem Ablesen abgespeichert.

Bei Verwendung eines aktiven RFID-Tags als Behälter-Tag können die Sensordaten in Form einer Temperaturkurve (Abhängigkeit Temperatur/Zeit) kontinuierlich während des gesamten Entnahme-Vorganges detektiert und abgespeichert werden. Es ist dann einfach möglich, eine typische Temperatur der Flüssigkeitsprobe aus der Temperaturkurve abzuleiten. Danach erfolgt das Abspeichern der abgeleiteten Temperatur.

Anstelle eines RFID-Tags kann z. B. auch ein NFC-Tag (Near Field Communication) als Behälter-Tag eingesetzt werden.

In der Figur ist zur Erläuterung des vorgeschlagenen Labor-Verfahrens und der vorgeschlagenen Labor-Anordnung zum Speichern und Erstellen von Daten schematisch ein Labor gezeigt, welchem eine Charge 1 (ein Satz, ein Posten) mit einer Vielzahl derartig ausgebildeter Probeentnahme-Behältern 2 zugeführt wird, wobei jeder dieser Probeentnahme-Behälter 2 einen Schreib/Lesespeicher 3 aufweist, welcher eine eindeutige Identifikation jedes individuellen Probeentnahme-Behälters 2 ermöglicht. Sukzessive werden im Labor gemäß einem Schritt A die einzelnen Probeentnahme-Behälter 2 der Charge 1 entnommen, wobei jeweils unter Einsatz einer Lese/Schreib-Station 4 gemäß einem Schritt B unter Zuordnung einer vergebenen individuellen Labor-Auftrags-Nummer individuell die Daten des Speichers 3 ausgelesen werden. Optional ist es anschließend möglich, bestimmte Daten, wie insbesondere die nachfolgend behandelten "ad-hoc-Probe-Sensorik-Daten", zu überschreiben respektive zu löschen (für den Benutzer unbemerkt). Gemäß einem Schritt C werden die ausgelesenen Daten individuell einer Eingangs-Station 5 des Labors zugeleitet. Dieses Überschreiben / Löschen der Daten bereits in der Lese/Schreib-Station 4 ist vorteilhaft, denn es erspart eine eigene Vorrichtung hierfür.

Alternativ können die Daten zunächst behalten werden und lediglich ein "Löschen erlaubt" - Datenwert auf den Schreib/Lesespeicher 3 geschrieben werden. Auch kann auf den Schreib/Lesespeicher 3 ein Zählwert eines Nutzungs-Zählers "hochgesetzt" werden, um auf diese Weise die Nutzung des Probeentnahme-Behälter 2 verfolgen zu können. Dies erspart einen Verfahrensschritt im Prozess.

Unter den auszulesenden Daten werden dabei z. B. folgende "administrative Daten" verstanden:
• Daten der Anlage (entfernte elektrische Leistungs-Einrichtung): kennzeichnende Daten wie Seriennummer, Leistung, Spannung, Aufstellungsort, Eigentümer, Flüssigkeitstyp der Flüssigkeitsprobe (z. B. Öltyp), GPS-Daten der entfernten elektrischen Leistungs-Einrichtung (des Equipments), bei welcher die ProbeEntnahme erfolgt ist,
• genauer Entnahmeort der Flüssigkeitsprobe am Equipment (wie z. B. "Entnahmehahn Nr. xxx", "Bodenbereich", "oberer Bereich", "mittlerer Bereich"), Entnahmemenge, Entnahmedatum, ausführende Service-Person (Name), Datum und Uhrzeit dieser Probeentnahme, die mittels der Sensorgruppe ermittelten "ad-hoc-Probe-Sensorik-Daten",
• anwenderseitige Informationen, wie z. B. Kommentare über besondere Vorkommnisse (kritische Beobachtungen) während des Entnahmevorganges, die gewünschten, vom Labor zu erstellenden Analysenwerte, z. B. in der Flüssigkeit gelöste Gase, durchzuführende chemische Tests, Furane, usw..
• ein während des Entnahmevorganges erzeugter eindeutiger Bestätigungscode mit eindeutiger Zuordnung zur entfernten elektrischen Leistungs-Einrichtung und zum Zeitpunkt dieser Probeentnahme,
• ein Schlüssel für den kontrollierten Zugriff.

Unter den auszulesenden Daten werden des Weiteren z. B. folgende "ad-hoc-Probe-Sensorik-Daten" verstanden:
• gelöster Wasserstoff,
• enthaltenes Azetylen,
• enthaltenes Ethin,
• enthaltenes Wasser,
• enthaltenes Kohlenmonoxyd,
• enthaltenes Kohlendioxyd,
• enthaltener Sauerstoff,
• enthaltener Stickstoff,
• ermittelte Leitfähigkeit,
• ermittelter Säuregehalt,
• Temperatur der Flüssigkeitsprobe während der Entnahme.

Gemäß einem Schritt D werden unter Beachtung der vergebenen Labor-Auftrags-Nummer die gewünschten Informationen den ausgelesenen Daten entnommen und einem lokalen Labor-Datenspeicher 9 zugeführt, welcher gemäß einem Schritt E die gewünschten Informationen an eine zentrale Labor-Datenbank 10 weitergibt. Die zentrale Labor-Datenbank 10 gibt der Eingangs-Station 5 gemäß Schritt F für jeden Probeentnahme-Behälter 2 individuell gewünschte Auftrags-/Kunden-Informationen 6 vor.

Die Eingangs-Station 5 des Labors weist eine Etikett-Druckvorrichtung auf, welche ein individuelles Etikett 7 entsprechend der vergebenen Labor-Auftrags-Nummer, der ausgelesenen Daten und gegebenenfalls der Auftrags-/Kunden-Informationen 6 erstellt, wobei das Etikett 7 gemäß einem Schritt G auf den Probeentnahme-Behälter 2 aufgeklebt wird. Die derart individuell gekennzeichneten Probeentnahme-Behälter 2 können nunmehr gemäß einem Schritt H in einem Probeentnahme-Behälter-Lager 8 des Labors gelagert werden, wobei der genaue Lagerort innerhalb des Lagers 8 zweckmäßig von der Eingangs-Station 5 vorgegeben und auf dem Etikett 7 vermerkt wird.

Nach dieser vorbereitenden Schrittfolge kann zeitlich entkoppelt hiervon die Diagnose der entnommenen Flüssigkeitsprobe im Labor erfolgen. Hierzu wird gemäß einem Schritt J der Probeentnahme-Behälter 2 dem Probeentnahme-Behälter-Lager 8 entnommen und es erfolgt eine Diagnose der entnommenen Flüssigkeitsprobe mittels Labor-Diagnose-Vorrichtungen 11. Die bei der Diagnose ermittelten "aktuellen Diagnose-Daten" werden gemäß einem Schritt K der zentralen Labor-Datenbank zugeführt. Als "aktuelle Diagnose-Daten" können z. B. ermittelt werden:
• gelöster Wasserstoff,
• enthaltenes Azetylen,
• enthaltenes Ethin,
• enthaltenes Wasser,
• enthaltenes Kohlenmonoxyd,
• enthaltenes Kohlendioxyd,
• enthaltener Sauerstoff,
• enthaltener Stickstoff,
• Leitfähigkeit,
• Säuregehalt.

Der entleerte Probeentnahme-Behälter 2 wird gemäß einem Schritt L einer Reinigungs-Vorrichtung 14 des Labors zugeführt und dort gereinigt. Danach erfolgt in einem Schritt M eine Trocknung des Probeentnahme-Behälters 2 in einer Trocken-Vorrichtung 15. Nunmehr steht der Probeentnahme-Behälter 2 einer erneuten Verwendung (Füllung mit einer Flüssigkeitsprobe) wieder zur Verfügung.

Unter Verwendung der in der zentralen Labor-Datenbank 10 gespeicherten Daten sowie der ermittelten Diagnose-Daten kann nunmehr unter Beachtung der vergebenen Labor-Auftrags-Nummer eine gewünschte Analyse der entnommenen Flüssigkeitsprobe gemäß einem Schritt N in einem individuellen Analysesystem 12 des Labors erfolgen. Je nach konkretem Ergebnis der durchgeführten Analyse erfolgt gemäß einem Schritt P eine Visualisierung des Ergebnisses und insbesondere eine Anzeige einer empfohlenen / durchzuführenden Maßnahme mit Hilfe einer Analyse-Anzeigevorrichtung 13.

Dabei ist es von Bedeutung, dass in der zentralen Labor-Datenbank 10 alle bereits in der Vergangenheit ermittelten Diagnose-Daten sowie die weiteren Daten der entfernten elektrischen Leistungs-Einrichtung abgespeichert sind. Auf diese Weise ist ein Vergleich der "aktuellen Diagnose-Daten" mit den in der Vergangenheit ermittelten Diagnose-Daten möglich. Diese aktuellen und historischen Diagnose-Daten können miteinander in Beziehung gebracht werden, verarbeitet werden sowie angezeigt (visualisiert) werden und es lassen sich derart Trends rechtzeitig erkennen, wobei Risiko-Abschätzungen, Fuzzylogik, "Neural Networks" usw. Verwendung finden können. Entsprechend dem Ergebnis der Analyse können unter Beachtung der vergebenen Labor-Auftrags-Nummer in der Analysen-Anzeigevorrichtung 13 folgende Entscheidungen / Empfehlungen A), B), C), D), E) zur Anzeige gebracht werden:
A) Entscheidung betreffend den zukünftigen Betrieb der entfernten elektrischen Einrichtung, wie z. B.:
   - entweder "Betrieb fortzuführen" oder
   - "Betrieb sofort einzustellen" oder
   - "Betrieb mit reduzierter Last" fortzuführen.
B) Empfehlung betreffend die Wartung der der entfernten elektrischen Einrichtung:
   - z. B. "Öl-Trocknung in sechs Monaten notwendig".
   - "Ölwechsel erforderlich".
C) Empfehlung betreffend die nächste Probeentnahme:
   z. B. ist eine Verkürzung des üblicherweise vorgesehenen Intervalls geboten, wenn die Werte von vorgegebenen Indikatoren (z. B. gelöste Gase) vorgegebene Grenzwerte übersteigen.
D) Empfehlung betreffend vorzunehmende Kalibrierungen:
   z. B. durch einen automatisierten Vergleich der "ad-hoc-Probe-Sensorik-Daten" mit den "aktuellen Diagnose-Daten" in der zentralen Labor-Datenbank 10. Ein derartiger automatisierter Vergleich ist bei gelöstem Gas (H2, CO, CO2, C2H2) und/oder physikalisch / chemischen Eigenschaften (Wassergehalt, Leitfähigkeit, Säuregehalt, pH-Wert) empfehlenswert. Für den Vergleich zwischen "ad-hoc-Probe-Sensorik-Daten" und "aktuellen Diagnose-Daten" kann ein Toleranzwert von z. B. 5...10% vorgegeben werden. Es kann ein Kalibrierungs-Qualitäts-Indikator gebildet werden, um zu entscheiden, ob die "ad-hoc-Probe-Sensorik-Daten" bei der Diagnose berücksichtigt werden können oder nicht, ob eine Kalibrierung erforderlich ist und ob die ad-hoc-Sensoreinheit aus dem Verkehr zu ziehen ist.
E) Nachführung betreffend eine erfolgte Ortsveränderung der entfernten elektrischen Einrichtung unter Beachtung der speziellen Anforderungen des Ortes.

Nachzutragen ist noch, dass die zentrale Labor-Datenbank 10 z. B. bei Ausführung des Labors als mobile Einheit zweckmäßig nicht körperlich in der mobilen Einheit selbst enthalten ist, sondern über einen Kommunikationskanal, wie z. B. eine Funkstrecke oder Internet, eingebunden wird. Dabei genügt es, einen Zugriff auf eine Untermenge des gesamten Datenbestands der zentralen Labor-Datenbank 10 zu ermöglichen. Diese Untermenge enthält die wesentlichen Daten der bestimmten entfernten elektrischen Leistungseinrichtung.

### Bezugszeichenliste

- 1: Charge (Satz, Posten) mit einer Vielzahl von Probeentnahme-Behältern
- 2: Probeentnahme-Behälter
- 3: Schreib/Lese-Speicher eines Probeentnahme-Behälters mit eindeutiger Identifikation
- 4: Lese/Schreib-Vorrichtung
- 5: Eingangs-Station inklusive Etikett-Druckvorrichtung
- 6: Auftrags-/Kunden-Informationen
- 7: Etikett
- 8: Probeentnahme-Behälter-Lager
- 9: lokaler Labor-Daten-Speicher
- 10: zentrale Labor-Datenbank
- 11: Labor-Diagnose-Vorrichtungen
- 12: Individuelles Analysesystem
- 13: Analyse-Anzeigevorrichtung
- 14: Reinigungs-Vorrichtung
- 15: Trocken-Vorrichtung

## Patentansprüche

1. Labor-Verfahren zum Speichern und Erstellen von Daten einer entfernten elektrischen Leistungs-Einrichtung,
- wobei Probeentnahme-Behälter (2) zur Aufnahme von Flüssigkeitsproben der entfernten elektrischen Leistungs-Einrichtung verwendet werden,
- wobei "administrative Daten" und eine eindeutige Identifikation der Flüssigkeitsprobe in einem Schreib/Lese-Speicher (3) des Probeentnahme-Behälters (2) abgespeichert sind,
**dadurch gekennzeichnet,**
- **dass** die Daten des Schreib/Lese-Speichers (3) unter Zuordnung einer vergebenen individuellen Labor-Auftragsnummer von einer Lese/SchreibVorrichtung (4) einer Eingangs-Station (5) des Labors ausgelesen und einer zentralen Labor-Datenbank (10) zugeführt werden,
- **dass** die Probeentnahme-Behälter (2) in einem Probeentnahme-Behälter-Lager (8) gelagert werden,
- **dass** eine zentrale Diagnose-Vorrichtung (11) zeitlich entkoppelt hiervon eine Diagnose der entnommenen Flüssigkeitsprobe vornimmt und die ermittelten "aktuellen Diagnose-Daten" der zentralen Labor-Datenbank (10) zuführt,
- **dass** die zentrale Labor-Datenbank (10) die "aktuellen Diagnose-Daten" und die in der Vergangenheit ermittelten Diagnose-Daten einem individuellen Analysesystem (12) zuführt, welches die Diagnose-Daten miteinander in Beziehung setzt und verarbeitet, um eine Abschätzung betreffend den zukünftigen Betrieb der entfernten elektrischen Leistungs-Einrichtung zu erhalten.

2. Labor-Verfahren nach Anspruch 1, **dadurch gekennzeichnet, dass** die zentrale Labor-Datenbank (10) der Eingangs-Station (5) für jeden Probeentnahme-behälter (2) individuell gewünschte Auftrags-/Kunden-Informationen vorgibt.

3. Labor-Verfahren nach Anspruch 1, **dadurch gekennzeichnet, dass** das Analysesystem (12) Empfehlungen betreffend die Wartung der entfernten elektrischen Leistungs-Einrichtung abgibt.

4. Labor-Verfahren nach Anspruch 1, **dadurch gekennzeichnet, dass** das Analysesystem (12) Empfehlungen betreffend die nächstfolgende Probeentnahme abgibt.

5. Labor-Verfahren nach Anspruch 1, wobei im Schreib/Lese-Speicher (3) des Probeentnahme-Behälters (2) zusätzlich Vorort ermittelte "ad-hoc-Probe-Sensorik-Daten" abgespeichert sind, **dadurch gekennzeichnet, dass** die "ad-hoc-Probe-Sensorik-Daten" in Beziehung zu den "aktuellen Diagnose-Daten" gesetzt werden.

6. Labor-Verfahren nach Anspruch 5, **dadurch gekennzeichnet, dass** das Analysesystem (12) Empfehlungen betreffend eine erforderliche Kalibrierung abgibt.

7. Labor-Verfahren nach Anspruch 1, **dadurch gekennzeichnet, dass** die Daten des Schreib/Lese-Speichers (3) des Probeentnahme-Behälters (2) nach dem erfolgten Auslesen überschrieben respektive gelöscht werden.

8. Labor-Verfahren nach Anspruch 1, **dadurch gekennzeichnet, dass** die Eingangs-Station (5) ein auf den Probeentnahme-Behälter (2) aufzuklebendes Etikett (7) erstellt, welches die vergebene individuelle Labor-Auftragsnummer dokumentiert.

9. Labor-Verfahren nach Anspruch 8, **dadurch gekennzeichnet, dass** das Etikett (7) den genauen Lagerort des Probeentnahme-Behälters (2) innerhalb des Probeentnahme-Behälter-Lagers (8) dokumentiert.

10. Labor-Verfahren nach Anspruch 1, **dadurch gekennzeichnet, dass** der entleerte Probeentnahme-Behälter (2) gereinigt und getrocknet wird.

11. Labor-Anordnung zum Speichern und Erstellen von Daten einer entfernten elektrischen Leistungs-Einrichtung,
- wobei Probeentnahme-Behälter (2) zur Aufnahme von Flüssigkeitsproben der entfernten elektrischen Leistungs-Einrichtung verwendet werden,
- wobei die Probeentnahme-Behälter (2) einen Schreib/Lese-Speicher (3) besitzen, welcher zumindest zum Abspeichern die Probeentnahme betreffender "administrativer Daten" geeignet ist und eine eindeutige Identifikation der Flüssigkeitsprobe ermöglicht,
**dadurch gekennzeichnet,**
- **dass** die Labor-Anordnung eine Eingangs-Station (5) mit einer Lese/SchreibVorrichtung (4) besitzt, welche zum Auslesen der Daten des Schreib/Lese-Speichers (3) dient,
- **dass** ein Probeentnahme-Behälter-Lager (8) zur Aufbewahrung der Probeentnahme-Behälter (2) vorgesehen ist,
- **dass** Labor-Diagnose-Vorrichtungen (11) vorgesehen sind, welche "aktuelle Diagnose-Daten" der Flüssigkeitsprobe ermitteln,
- **dass** eine zentrale Labor-Datenbank (10) vorgesehen ist, welcher die "aktuellen Diagnose-Daten" zugeführt werden und in welcher die in der Vergangenheit ermittelten Diagnose-Daten abgespeichert sind,
- **dass** ein individuelles Analysesystem (12) vorgesehen ist, welches die "aktuellen Diagnose-Daten" und die in der Vergangenheit ermittelten Diagnose-Daten zueinander in Beziehung setzt.

12. Labor-Anordnung nach Anspruch 11, **dadurch gekennzeichnet, dass** das individuelle Analysesystem (12) zur Visualisierung der Ergebnisse und/oder zur Anzeige empfohlener / durchzuführender Maßnahme eine Analyse-Anzeigevorrichtung (13) beaufschlagt.

13. Labor-Anordnung nach Anspruch 11, **dadurch gekennzeichnet, dass** der entleerte Probeentnahme-Behälter (2) zunächst einer Reinigungs-Vorrichtung (14) des Labors und anschließend einer Trocken-Vorrichtung (15) zugeführt wird.

14. Labor-Anordnung nach Anspruch 11, **dadurch gekennzeichnet, dass** die zentrale Labor-Datenbank (10) körperlich nicht selbst Teil der Labor-Anordnung ist, sondern über einen Kommunikationskanal mit der Labor-Anordnung verbunden ist.
